# FASCICULE DE BREVET EUROPEEN

(11) **EP 1 569 847 B1**
(45) Date de publication et mention de la délivrance du brevet: **24.05.2006**
(21) Numéro de dépôt: 03796144.8
(22) Date de dépôt: 02.12.2003
(51) Int. Cl.: B64G 1/24, B64G 1/44

(54) **PROCEDE DE PILOTAGE SOLAIRE DE VEHICULE SPATIAL**
VERFAHREN ZUR LAGEREGELUNG EINES RAUMFAHRZEUGES MITTELS SONNENSTRAHLUNGSKRAFT
SOLAR CONTROL METHOD FOR SPACECRAFT

(30) Priorité: 12.12.2002 FR 0215714
(43) Date de publication de la demande: 07.09.2005
(73) Titulaire: EADS ASTRIUM SAS, 31402 Toulouse Cedex 4 (FR)
(72) Inventeur: POLLE, Bernard, F-31402 Toulouse Cedex 4 (FR)
(74) Mandataire: Bérogin, Francis
(86) Numéro de dépôt international: PCT/FR2003/003567
(87) Numéro de publication internationale: WO 2004/063009

(56) Documents cités:
- EP-A- 0 101 333
- EP-A- 0 794 120
- FR-A- 2 655 167
- FR-A- 2 656 586
- KYROUDIS G A: "SURVEY OF SOLAR-SAILING CONFIGURATIONS FOR SATELLITE ATTITUDE CONTROL" PAPER AMERICAN ASTRONAUTICAL SOCIETY, XX, XX, vol. 91-486, 1991, pages 815-838, XP000671524

## Description

La présente invention concerne le pilotage solaire d'un véhicule spatial et notamment d'un satellite par création d' un couple externe tendant à faire tourner le satellite dans un repère absolu, en donnant à des ailes du satellite, sensiblement symétriques, munies de panneaux solaires, orientables indépendamment autour d'un axe commun , des écarts de pointage par rapport à leur orientation nominale vers le soleil.

On connaît déjà des procédés de pilotage solaire. En particulier, le document EP-A-0101333 décrit et revendique un procédé de commande d'attitude d'un satellite placé sur une orbite géostationnaire, dite GEO. Le satellite est muni de deux ailes portant des panneaux solaires, placées symétriquement de part et d'autre du corps du satellite et orientables indépendamment l'une de l'autre autour d'un axe nord-sud qui constitue l'axe de tangage du corps du satellite en orbite . Pour augmenter les moments créés par des écarts de pointage, chaque aile porte au moins une ailette latérale oblique.

On provoque l'apparition d'un moment autour d'un axe dit de déséquilibre I situé dans le plan des ailes et orthogonal à l'axe de rotation par dépointage simultané, dans le même sens et de même amplitude, des deux ailes, à partir de l'orientation nominale. On créée un moment dit de moulin à vent autour d'un axe J perpendiculaire à un plan médian entre les panneaux dépointés en donnant aux ailes des dépointages de sens opposé. Par contre il n'est pas possible de créer un couple autour de l'axe commun de rotation des ailes.

Ce mode de pilotage sur une orbite géostationnaire où les perturbations d'origine solaire sont très prépondérantes, présente de nombreux avantages. Il permet de fournir des couples externes compensant l'effet des perturbations et de désaturer les moyens d'échange de moments cinétiques internes (roues de réaction ou gyrodynes) prévus dans le corps du satellite sans consommer des ergols. La présence des ailettes permet d'obtenir des couples appréciables en dépit de la valeur très faible de la pression solaire, qui est de l'ordre de 4,6.10⁻⁶N/m².

Mais il est impossible de créer des couples externes autour de l'axe de rotation des ailes, aligné avec l'axe de tangage en orbite géostationnaire , puisque les axes I et J restent dans un même plan lors du parcours de l'orbite . Sur une orbite GEO il reste donc nécessaire d'utiliser des tuyères pour obtenir des moments externes.

Le pilotage solaire n'est pas utilisé à l'heure actuelle pour des satellites placés en orbite basse (dite LEO) ou intermédiaire (dit MEO). Diverses raisons ont amené à cette exclusion. Il faut notamment prendre en considération l'importance relative des couples perturbateurs qui agissent sur les satellites. Il s'agit des couples d'origine magnétique, aérodynamique, de gradient de gravité et solaire. La dernière source est très prépondérante à l'altitude d'une orbite géosynchrone, ce qui rend le pilotage soliare attractif. En orbite basse, la proximité de la planète se traduit par un champ élevé qui rend le pilotage magnétique à l'aide de magnéto-coupleurs avantageux.

Sur les satellites actuels en orbite moyenne, en particulier à des altitudes de l'ordre de 20 000 km, on utilise en général aussi des magnéto-coupleurs, soit directement pour le pilotage, soit pour désaturer ou décharger des roues de réaction.

Cette solution est notamment utilisée sur les satellites de localisation terrestre (satellites GPS).

Mais le pilotage par forces électromagnétiques a des inconvénients aux orbites dites intermédiaires ou moyennes: le champ magnétique étant faible, des courants importants sont nécessaires pour créer des couples appréciables. Le champ électromagnétique produit par les coupleurs perturbe les horloges qui doivent être extrêmement précises pour ce type de mission. Aux altitudes intermédiaires, le champ magnétique est peu stable et sujet à des orages magnétiques.

Dans le plupart des cas les orbites intermédiaires présentent une forte inclinaison sur l'équateur de sorte que l'élévation du soleil présente de fortes variations et peut être très élevées à certaines périodes. Ces variations rendent l'orientation des axes I et J des ailes par rapport à un repère inertiel très variable et permettent de créer des moments externes dans l'ensemble de l'espace 3 dimensions.

La présente invention vise notamment à fournir un procédé de pilotage utilisable notamment pour créer les moments externes requis pour compléter l'utilisation des moyens d'échange de moments cinétiques portés par le corps d'un satellite ou véhicule spatial et destinés à orienter le corps du satellite autour des trois axes d'un repère inertiel, notamment sur les satellites en orbite intermédiaire, tels que les satellites utilisés pour des missions de navigation, exigeant des orbites très stables et prévisibles pour arriver à la précision nécessaire. Elle vise également, à titre secondaire, à permettre de compenser les couples perturbateurs qui s'accumulent pendant les intervalles de temps très longs, souvent de l'ordre de l'année, qui séparent les manoeuvres de maintien à poste. Elle vise également à permettre un pilotage solaire 3 axes sur un véhicule spatial sur un trajet interplanétaire.

Dans ce but, l'invention propose notamment un procédé de commande d'attitude d'un véhicule spatial, et notamment d'un satellite placé sur une orbite inclinée sur l'équateur, le corps du véhicule ou satellite étant muni d'au moins deux ailes placées symétriquement de part et d'autre du corps du véhicule ou du satellite et orientables indépendamment autour d'un axe commun.

Suivant un premier aspect, l'invention propose un procédé de pilotage d'un véhicule spatial présentant un corps équipé de moyens de création de moments cinétiques internes et portant deux ailes munies de panneaux solaires, placées symétriquement de part et d'autre du corps du véhicule, orientables indépendamment sur le corps autour d'un axe commun et munies d'éléments qui provoquent la création d'une force résultante de pression solaire décalée par rapport à l'axe de rotation sur une aile lorsque cette aile est dépointée autour du dit axe par rapport au soleil, suivant lequel :
(a) pour créer un moment tendant à changer l'orientation du véhicule autour d'un axe de moulin à vent (J) orthogonal au plan moyen des ailes, on donne aux ailes des dépointages opposés,
   pour créer un moment tendant à changer l'orientation du véhicule autour d'un axe de déséquilibre (I) situé dans le plan nominal des ailes et orthogonal à l'axe de rotation des ailes sur le corps, on donne aux ailes des dépointages de même sens,
   caractérisé en ce qu' on commande l'attitude du véhicule spatial pour faire varier dans le temps l'orientation des axes de moulin à vent et de déséquilibre pour permettre de créer temporairement un moment autour de n'importe quelle direction dans un repère inertiel.

Suivant un autre aspect, l'invention propose un procédé de pilotage d'un satellite placé sur une orbite non géosynchrone inclinée sur l'équateur, le satellite ayant un corps équipé de moyens de création de moments cinétiques internes et muni de deux ailes munies de panneaux solaires, placées symétriquement de part et d'autre du corps du satellite , orientables indépendamment autour d'un axe commun et munies d'éléments tels que des ailettes qui provoquent la création d'une force de pression solaire décalée par rapport à l'axe de rotation sur une aile lorsque cette aile est dépointée autour du dit axe par rapport au soleil, suivant lequel :
- on commande l'attitude du satellite en orbite de façon à donner aux deux ailes, en dehors de périodes de création de couples de désaturation, une orientation nominale qui, en chaque point de l'orbite, est telle qu'un axe orthogonal au plan des ailes soit dirigé sensiblement vers le soleil et telle qu'un axe orthogonal à la fois à la direction du soleil et à l'axe de rotation des ailes balaie un plan orthogonal à la direction du soleil, et
- on crée des moments de pilotage du satellite en donnant aux deux ailes des écarts de pointage par rapport à leur orientation nominale sur le corps du satellite, dans le même sens ou des sens opposés, lors d'emplacements sur l'orbite dépendant de l' orientation du moment à créer.

En général le type de pointage pour la mise en oeuvre de l'invention sur un satellite sera le "pointage Nadir solaire". Ce mode de pointage permet une désaturation des moyens de création de moment cinétique interne suivant les trois axes alors que le mode de pilotage dans le cas d'une orbite géostationnaire n'autorisait qu'une commande d'attitude suivant des axes du satellite orthogonaux à l'axe de rotation des ailes.

Dans le cas d'un véhicule spatial, au cours d'une mission interplanétaire, on peut utiliser les moyens de création de moment cinétique interne (plutôt que des tuyères, dont la fiabilité est moindre) pour créer un spin lent ou une orientation permettant, par pilotage solaire, de décharger les roues ou gyrodynes qui ont permis antérieurement de modifier le pointage autour de l'axe de rotation des ailes.

Bien que l'invention puisse être mise en oeuvre avec des ailes à panneaux solaires simples, il est avantageux d'utiliser une configuration du genre décrit dans le document EP-A-0101333 déjà mentionné ou une autre configuration donnant un effet comparable.

Les caractéristiques ci-dessus ainsi que d'autres apparaîtront mieux à la lecture de la description qui suit d'un mode particulier de réalisation, donné à titre d'exemple non limitatif.

Le description se réfère aux dessins qui l'accompagnent dans lesquels :
- la figure 1 est un schéma de principe montrant les paramètres qui interviennent dans la mise en oeuvre de l'invention dans le cas de sa mise en oeuvre sur un satellite ;
- les figures 2A et 2B montrent le pointage nominal "Nadir solaire" d'un satellite sur orbite intermédiaire , dite MEO, respectivement pour des élévations haute et basse du soleil par rapport au plan de l'orbite, chaque fois pour deux positions du satellite ;

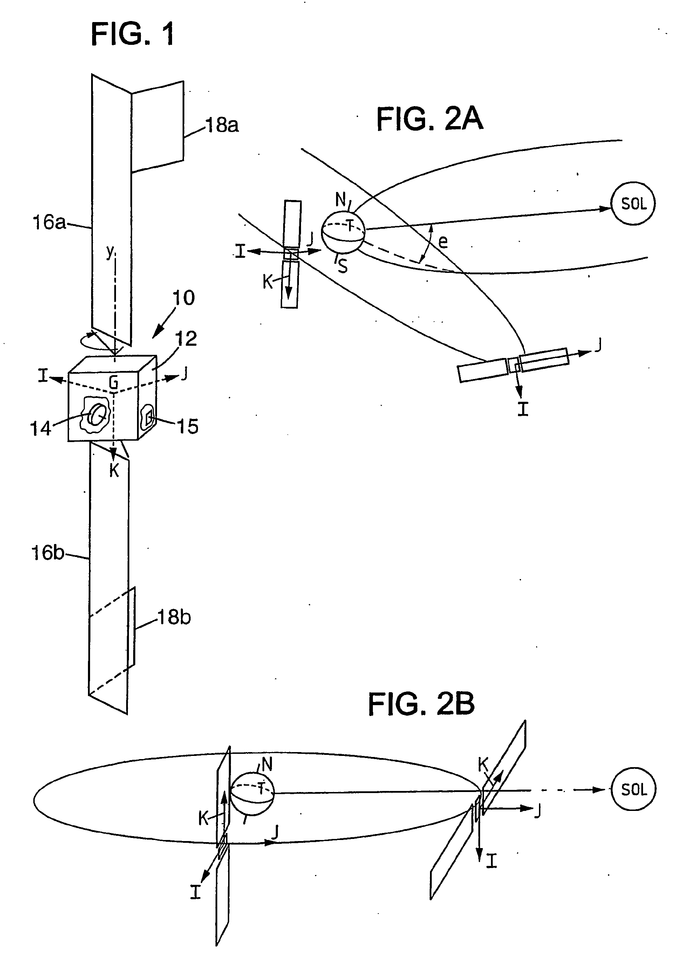

Le satellite 10 schématisé sur la figure 1 présente un corps 12 portant deux ailes 16a et 16b pouvant tourner sur le corps autour du même axe K. Des moteurs non représentés permettent de faire tourner les ailes 16a et 16b indépendamment l'une de l'autre autour de l'axe K, par exemple en réponse à des commandes provenant d'un système intégré au satellite ou provenant du sol. Le corps du satellite contient encore des moyens fournissant un moment cinétique de stabilisation et de commande. Ces moyens peuvent être constitués notamment par des roues cinétiques d'axe fixe 14 et de vitesse commandable ou par des actionneurs gyroscopiques dont la roue est portée par un cardan orientable. Par échange de moments cinétiques internes , l'attitude du corps du satellite peut être maintenue ou commandée. Elle peut être évaluée à l'aide de capteurs 15, par exemple d'un capteur d'horizon terrestre dans le cas d'un satellite sur orbite intermédiaire lorsqu' on cherche à maintenir un axe lié au corps orienté vers la terre (axe de lacet).

Dans le mode avantageux de réalisation montré en figure 1, à chaque aile 16a ou 16b est fixée une ailette 18a ou 18b, dans une orientation par rapport à l' aile invariable. Les deux ailettes sont symétriques par rapport au centre du satellite lorsque les ailes sont en position nominale. Le calcul permet de déterminer l'effet de faibles dépointages des ailes par rapport à une orientation nominale face au soleil. On pourra se reporter à ce sujet au document EP 010133 déjà mentionné.

La capacité de création de couples d'orientation par dépointage n'est pas la même autour de tous les axes passant par le centre de gravité G du satellite. La capacité de création d'un couple externe appréciable apparaît immédiatement autour de deux axes:
- l'axe J , qu'on qualifie souvent de "moulin à vent", orthogonal au plan moyen des panneaux solaires ou des ailes,
- l'axe I situé dans le plan moyen des panneaux solaires et orthogonal à l'axe y de rotation des panneaux solaires, souvent qualifié d'axe de déséquilibre.

Dans les satellites géostationnaires à pilotage solaire, la création de couples par des dépointages de même sens ou de sens opposés des deux ailes est déjà utilisé pour produire des couples autour des axes J et K. En revanche, les couples parasites le long du troisième axe, qui constituent l'axe de tangage sur un satellite géostationnaire, sont accumulés par les moyens présentant un moment cinétique (roues ou gyrodynes) et la désaturation, lorsqu'elle est nécessaire, est effectuée à l'aide du système de propulsion. Mais la désaturation ou simplement le déchargement (unloading) des roues au moyen de tuyères, utilisable d'ailleurs pour n'importe quelle mission, perturbe l'orbite du satellite et consomme des ergols. Au surplus, les systèmes de propulsion sont loin de présenter une fiabilité à long terme absolue.

Comme indiqué plus haut, l'invention implique que, dans le cas d'un satellite, l'orbite soit inclinée sur l'équateur ou que l'on renonce, à certaines périodes de la mission , au pointage nominal du corps du satellite.

Dans le cas donné ici à titre d'exemple, le satellite est commandé suivant une loi de pointage "Nadir solaire" et on utilise des dépointages commandés, de même sens ou de sens opposés, des ailes par rapport à l'orientation nominale "Nadir solaire" pour le pilotage. Sur des orbites fortement inclinées sur l'écliptique et sur l'équateur, l'angle d'élévation du soleil par rapport au plan de l'orbite peut par exemple prendre les positions extrêmes montrées en figures 2A et 2B.

La figure 2A montre l'attitude prise par le satellite et par les ailes à deux positions sur l'orbite, lorsque l'élévation solaire e est maximale (c'est-à-dire lors des solstices). L'axe J orthogonal au plan des ailes est dans tous les cas orienté vers le soleil. En revanche, l'orientation de l'axe K de rotation des panneaux solaires change cycliquement, à la période orbitale. L'axe de déséquilibre I balaie le plan orthogonal à la direction du soleil.

Grâce à ces variations cycliques qui se produisent au cours de la circulation sur l'orbite, il est possible, à certaines périodes, de décharger ou de désaturer les moyens de création de moments cinétiques et de réorienter le moment cinétique de façon qu'un pointage dans n'importe quelle direction d'un repère inertiel est possible. Plus précisément, le pilotage solaire sur une telle orbite permet de décharger les moyens de création de moment cinétique interne (voire même de modifier directement l'orientation du satellite) autour des axes de moulin à vent J et de déséquilibre I et de plus de décharger les moyens de création de moment cinétique autour de l'axe K de rotation des ailes.

La figure 2B, sur laquelle sont représentées des orientations successives prises par le satellite sur son orbite alors que l'élévation du soleil est nulle (lors des équinoxes) montre que la même possibilité subsiste. Dans tous les cas les axes « actifs » I et J balayent l'espace 3D.

## Revendications

1. Procédé de pilotage d'un véhicule spatial (10) présentant un corps (12) équipé de moyens de création de moments cinétiques internes (14) et portant deux ailes (16a, 16b) munies de panneaux solaires, placées symétriquement de part et d'autre du corps du véhicule (10), orientables indépendamment sur le corps autour d'un axe commun (k) et munies d'éléments (18a, 18b) qui provoquent la création d'une force de pression solaire décalée par rapport à l'axe de rotation (k) sur une aile (16a, 16b) lorsque cette aile (16a, 16b) est dépointée autour du dit axe par rapport au soleil (sol), suivant lequel :
(a) pour créer un moment tendant à changer l'orientation du véhicule (10) autour d'un axe de moulin à vent (J) orthogonal au plan moyen des ailes (16a, 16b), on donne aux ailes (16a, 16b) des dépointages opposés,
(b) pour créer un moment tendant à changer l'orientation du véhicule (10) autour d'un axe de déséquilibre (I) situé dans le plan nominal des ailes (16a,16b) et orthogonal à l'axe de rotation (K) des ailes (16a, 16b) sur le corps (12), on donne aux ailes (16a, 16b) des dépointages de même sens,
(c) **caractérisé en ce qu'** on commande l'attitude du véhicule spatial (10) pour faire varier dans le temps l'orientation des axes de moulin à vent (J) et de déséquitibre (I) pour permettre de créer temporairement un moment autour de n'importe quelle direction dans un repère inertiel.

2. Procédé suivant la revendication 1, **caractérisé en ce que** l'étape (c) est réalisée en plaçant le véhicule (10) sur une orbite telle que le plan commun des axes de moulin à vent (J) et de déséquilibre (I) change dans l'espace inertiel au cours du parcours de l'orbite.

3. Procédé suivant la revendication 2, **caractérisé en ce qu'**on place le véhicule (10) sur une orbite MEO.

4. Procédé suivant la revendication 1, **caractérisé en ce que**, sur un véhicule en mission interplanétaire, l'étape (c) est réalisée en orientant les ailes (16a, 16b) vers le soleil et en donnant au véhicule (10) un spin lent autour de la direction du soleil (SOL).

5. Procédé suivant la revendication 1, **caractérisé en ce qu'**on maintient l'axe (K) des ailes (16a, 16b) sensiblement orthogonal à la direction du soleil (SOL).

6. Procédé de pilotage d'un satellite (10) placé sur une orbite non géosynchrone inclinée sur l'équateur, le satellite (10) ayant un corps (12) équipé de moyens de création de moments cinétiques internes (14) et muni de deux ailes (16a,16b) munies de panneaux solaires, placées symétriquement de part et d'autre du corps (12) du satellite (10), orientables indépendamment autour d'un axe commun (K) et munies d'éléments tels que des ailettes (18a, 18b) qui provoquent la création d'une force de pression solaire décalée par rapport à l'axe de rotation (K) sur une aile (16a,16b) lorsque cette aile (16a,16b) est dépointée autour du dit axe (K) par rapport au soleil (SOL), suivant lequel :
- on commande l'attitude du satellite (10) en orbite de façon à donner aux deux ailes (16a, 16b), en dehors de périodes de création de couples de désaturation, une orientation nominale qui, en chaque point de l'orbite, est telle qu'un axe (J) orthogonal au plan des ailes (16a,16b) soit dirigé sensiblement vers le soleil (SOL) et telle qu'un axe orthogonal (I) à la fois à la direction du soleil (SOL) et à l'axe (K) de rotation des ailes (16a,16b) balaie un plan orthogonal à la direction du soleil (SOL), et
- on crée des moments de pilotage du satellite (10) en donnant aux deux ailes (16a, 16b) des écarts de pointage par rapport à leur orientation nominale sur le corps (12) du satellite (10), dans le même sens ou des sens opposés, lors d'emplacements sur l'orbite dépendant de l' orientation du moment à créer.

7. Procédé suivant l'une quelconque des revendications précédentes, **caractérisé en ce qu'**on munit chacune des ailes (16a, 16b) d'au moins une ailette latérale oblique (18a, 18b) constituant le dit élément qui provoque la création d'une force de pression solaire décalée par rapport à l'axe de rotation de l'aile (16a, 16b).

## Claims

1. A control method for a spacecraft (10) comprising a body (12) equipped with means of creating internal angular momentum (14) and bearing two wings (16a, 16b) provided with solar panels, disposed symmetrically on either side of said body of said craft (10), and which can be oriented independently on said body around a common axis (K) and provided with elements (18a, 18b) which create a solar pressure force offset in relation to said axis of rotation (K) on one wing (16a, 16b) when said wing (16a, 16b) is mispointed around said axis in relation to the sun (SOL), wherein:
(a) in order to create a torque tending to change the orientation of said craft (10) around a windmill axis (J) which is orthogonal to the mid-plane of said wings (16a, 16b), said wings (16a, 16b) are mispointed in an opposing manner,
(b) in order to create a torque tending to change the orientation of said craft (10) around an axis of imbalance (I) which is located in the nominal plane of said wings (16a, 16b) and which is orthogonal to said axis of rotation (K) of said wings (16a, 16b) on said body (12), said wings (16a, 16b) are mispointed in the same direction,
(c) **characterized in that** the attitude of the spacecraft (10) is controlled to vary in time the orientation of the windmill (J) and imbalance (I) axes in order to temporarily create a torque around any direction in an inertial reference frame.

2. The method as claimed in claim 1 **characterized in that** step (c) is performed by placing said vehicle (10) in an orbit such that the common plane of said windmill (J) and imbalance (I) axes changes in said inertial reference frame along the orbital path.

3. The method as claimed in claim 2, **characterized in that** said craft (10) is placed in an MEO orbit.

4. The method as claimed in claim 1, **characterized in that**, on a craft on an interplanetary mission, said step (c) is performed by orienting said wings (16a, 16b) towards the sun and by imparting upon said vehicle (10) a slow spin around the direction of the sun (SOL).

5. The method as claimed in claim 1, **characterized in that** said axis (K) of said wings (16a, 16b) is kept substantially orthogonal to the direction of the sun (SOL).

6. Control method for a satellite (10) placed in a non-geosynchronous orbit inclined over the equator, the satellite (10) having a body (12) equipped with means of creating internal angular momentum (14) and bearing two wings (16a, 16b) which are provided with solar panels, disposed symmetrically on either side of said body (12) of said satellite (10), which can be oriented independently around a common axis (K) and provided with elements such as tabs (18a, 18b) which create a solar pressure force that is offset in relation to said axis of rotation (K) on a wing (16a, 16b) when said wing (16a, 16b) is mispointed around said axis (K) in relation to the sun (SOL), wherein:
- the attitude of said satellite (10) when orbiting is controlled in such a way as to give both wings (16a, 16b), outside periods in which offloading torques are created, a nominal orientation which, at each point in the orbit, is such that an axis (J) orthogonal to a plane of said wings (16a, 16b) is directed substantially towards the sun (SOL) and such that an axis (I) that is orthogonal both to the direction of the sun (SOL) and to said axis of rotation (K) of said wings (16a, 16b) sweeps a plane that is orthogonal to the direction to the sun (SOL), and
- satellite (10) control torques are created by giving both wings (16a, 16b) pointing deviations relative to a nominal orientation of said wings (16a, 16b) on said body (12) of said satellite (10), in the same direction or in opposing directions, at positions in the orbit dependent on the orientation of the torque to be created.

7. The method as claimed in any one of the preceding claims **characterized in that** each of said wings (16a, 16b) is provided with at least one oblique lateral tab (18a, 18b) constituting said element which creates the solar pressure force offset in relation to said axis of rotation of said wing (16a, 16b).

## Patentansprüche

1. Verfahren zur Lageregelung eines Raumfahrzeugs (10), das einen Körper (12) aufweist, welcher mit Mitteln zur Erzeugung von internen Drehimpulsen (14) ausgestattet ist und zwei mit Solarsegeln ausgerüstete Flügel trägt, die symmetrisch auf beiden Seiten des Fahrzeugkörpers (10) angeordnet sind und unabhängig auf dem Körper um eine gemeinsame Achse (K) drehbar und mit Elementen (18a, 18b) ausgestattet sind, welche für die Erzeugung eines gegen die Drehachse (K) versetzten Sonnendrucks auf einen Flügel (16a, 16b) sorgen, wenn dieser Flügel (16a, 16b) um die Achse im Verhältnis zur Sonne (So)verschoben wird, nach welchem Verfahren
(a) man den Flügeln (16a, 16b) entgegen gesetzte Verschiebungsimpulse mitgibt, um einen Schubimpuls zur Änderung der Ausrichtung des Fahrzeugs (10) um eine rechtwinklig zur Mittenebene der Flügel (16a, 16b) verlaufende Windmühlenachse (J) zu erzeugen,
(b) man den Flügeln (16a, 16b) in gleicher Richtung verlaufende Verschiebungsimpulse mitgibt, um einen Schubimpuls zur Änderung der Ausrichtung des Fahrzeugs (10) um eine auf der Normalebene der Flügel (16a, 16b) und rechtwinklig zur Drehachse (K) der Flügel (16a, 16b) auf dem Körper (12) verlaufende Exzenterachse (I) zu erzeugen,
(c) **dadurch gekennzeichnet, dass** man die Lage des Raumfahrzeugs (10) steuert, um die Ausrichtung der Windmühlenachse (J) und der Exzenterachse (I) zu einer vorübergehenden Änderung zu veranlassen, damit um irgend eine Richtung in einem Trägheitssystem ein zeitlich begrenztes Drehmoment erzeugt werden kann.

2. Verfahren nach Anspruch 1, **dadurch gekennzeichnet, dass** Schritt (c) durchgeführt wird, indem das Fahrzeug (10) auf eine solche Umlaufbahn gebracht wird, dass sich die gemeinsame Ebene von Windmühlenachse (J) und Exzenterachse (I) während des Durchlaufs durch die Umlaufbahn im Trägheitsraum ändert.

3. Verfahren nach Anspruch 2, **dadurch gekennzeichnet, dass** das Fahrzeug (10) auf eine mittlere Umlaufbahn gebracht wird.

4. Verfahren nach Anspruch 1, **dadurch gekennzeichnet, dass** Schritt (c) bei einem Fahrzeug mit interplanetarischer Mission erfolgt, indem die Flügel (16a, 16b) zur Sonne ausgerichtet werden und dem Fahrzeug (10) ein langsames Drehmoment um die Richtung zur Sonne mitgegeben wird.

5. Verfahren nach Anspruch 1, **dadurch gekennzeichnet, dass** man die Achse (K) der Flügel (16a, 16b) ungefähr im rechten Winkel zur Richtung auf die Sonne (So) hält.

6. Verfahren zur Lageregelung eines Satelliten (10) auf einer nicht geosynchronen gegen den Äquator geneigten Umlaufbahn, wobei der Satellit (10) einen Körper (12) aufweist, welcher mit Mitteln zur Erzeugung von internen Drehimpulsen (14) ausgestattet ist und zwei mit Solarsegeln ausgerüstete Flügel trägt, die symmetrisch auf beiden Seiten des Satellitenkörpers (10) angeordnet und unabhängig auf dem Körper um eine gemeinsame Achse (K) drehbar sind und mit Flossenelementen (18a, 18b) ausgestattet sind, welche zur Erzeugung eines gegen die Drehachse (K) versetzten Sonnendrucks auf einen Flügel (16a, 16b) führen, wenn dieser Flügel (16a, 16b) um die Achse im Verhältnis zur Sonne (So) verschoben wird, nach welchem Verfahren
- man die Lage des Satelliten (10) in der Umlaufbahn so steuert, dass man den beiden Flügeln (16a, 16b), außerhalb der Zeiten, in denen eine Entsättigung der Drehmomente stattfindet, eine nominale Ausrichtung gibt, die an jedem Punkt der Umlaufbahn so ist, dass eine Achse (J) im rechten Winkel zur Ebene der Flügel ungefähr zur Sonne (So) hin ausgerichtet wird und so, dass eine gleichzeitig im rechten Winkel zur Richtung der Sonne (So) und zur Drehachse (K) der Flügel (16a, 16b) verlaufende Achse eine im rechten Winkel zur Richtung der Sonne (So) verlaufende Ebene überstreicht und
- man Impulse zur Lageregelung des Satelliten erzeugt, (10) indem man den zwei Flügeln (16a, 16b) bezüglich ihrer nominalen Ausrichtung auf dem Körper (12) des Satelliten (10) bei den Standorten auf der Umlaufbahn je nach der Ausrichtung des zu erzeugenden Impulses unterschiedliche Verschiebungsimpulse in gleicher oder entgegengesetzter Richtung mitgibt.

7. Verfahren nach einem der vorhergehenden Ansprüche, **dadurch gekennzeichnet, dass** jeder der Flügel mit mindestens einer seitlichen schräg stehenden Flosse (18a, 18b) ausgestattet wird, welche das Element darstellt, das für den gegen die Drehachse versetzten Sonnendrucks auf einen Flügel (16a, 16b) sorgt.
